# EUROPÄISCHE PATENTSCHRIFT

(11) **EP 1 738 618 B1**
(45) Veröffentlichungstag und Bekanntmachung des Hinweises auf die Patenterteilung: **07.01.2009**
(21) Anmeldenummer: 05706730.8
(22) Anmeldetag: 01.02.2005
(51) Int. Cl.: H05B 41/282

(54) **ANSTEUERSCHALTUNG FÜR WANDLER**
CONTROL CIRCUIT FOR CONVERTERS
CIRCUIT D'ATTAQUE POUR CONVERTISSEUR

(30) Priorität: 24.02.2004 DE 102004008908
(43) Veröffentlichungstag der Anmeldung: 03.01.2007
(73) Patentinhaber: Patent-Treuhand-Gesellschaft für elektrische Glühlampen mbH, 81543 München (DE)
(72) Erfinder: SOWA, Wolfram, 81739 München (DE); SCHALLMOSER, Oskar, 85521 Ottobrunn (DE)
(74) Vertreter: Raiser, Franz
(86) Internationale Anmeldenummer: PCT/DE2005/000155
(87) Internationale Veröffentlichungsnummer: WO 2005/084084

(56) Entgegenhaltungen:
- EP-A- 0 735 658
- EP-A- 0 936 845
- US-A- 5 097 182
- US-A- 5 914 569
- US-B1- 6 229 720

## Beschreibung

### Technisches Gebiet

Diese Erfindung befasst sich mit einer Wandlerschaltung, insbesondere einem Klasse-E-Konverter. Die Erfindung richtet sich ferner vorzugsweise auf Wandlerschaltungen zum Einsatz in elektronischen Vorschaltgeräten für Lampen.

### Stand der Technik

Elektronische Vorschaltgeräte für Lampen mit verschiedenen Wandlerkonzepten sind an sich bekannt. Ferner ist das Klasse-E-Wandlerkonzept allgemein bekannt, bei Vorschaltgeräten für Lampen jedoch nicht gebräuchlich.

In der Schrift EP 0 936 845 ist eine Wandlerschaltung für elektronische Vorschaltgeräte zum Zünden und Betreiben einer Leuchtstofflampe offenbart. Die Wandlerschaltung weist eine Oszillatorschaltung auf, die in Serie zu einem Schalttransistor geschaltet ist. Außerdem weist die Wandlerschaltung eine Ansteuerschaltung zum Ansteuern des Schalttransistors auf. Die Ansteuerschaltung umfasst zwei Schwellenwertbauteile (Komparatoren), die für das Öffnen bzw. Schließen des Schalttransistors zuständig sind. Das jeweilige Ausgangssignal der beiden Schwellenwertbauteile wird über ein drittes Schwellenwertbauteil (Flip-Flop) dem Steueranschluss des Schalttransistors zugeführt.

In der Schrift EP 0 735 658 ist eine Quasi-Klasse-E-Wandlerschaltung für elektronische Vorschaltgeräte zum Zünden und Betreiben einer Leuchtstofflampe offenbart. Auch hier ist eine Oszillatorschaltung in Serie zu einem Schalttransistor geschaltet. Eine Ansteuerschaltung zum Ansteuern des Schalttransistors weist ein Schwellenwertbauteil (Operationsverstärker) auf. Außerdem ist eine konventionelle Wandlerschaltung offenbart, bei der die beiden Signale von zwei Schwellwertbauteilen (Operationsverstärker) ODER verknüpft einem dritten Schwellwertbauteil (Komparator) zugeführt werden.

### Darstellung der Erfindung

Der Erfindung liegt das Problem zugrunde, eine hinsichtlich der Ansteuerschaltung eines Schalttransistors verbesserte Wandlerschaltung anzugeben.

Die Erfindung richtet sich auf eine Wandlerschaltung für elektronische Vorschaltgeräte für Lampen mit einem Schalttransistor und einer Ansteuerschaltung zur Ansteuerung des Schalttransistors, welche dazu ausgelegt ist, den Schalttransistor ansprechend auf einen Spannungs- oder Stromwert zu schalten, wobei die Ansteuerschaltung genau zwei in Reihe geschaltete Schwellenwertbauteile aufweist, welche Schwellenwertbauteile auf ein jeweiliges Eingangssignal schwellenwertabhängig mit einem Ausgangssignalübergang reagieren, ein Eingang eines ersten der Schwellenwertbauteile direkt mit einem Abgriff an einem Messwiderstand verbunden ist, welcher Messwiderstand in Reihe zum Schalttransistor geschalten ist und der Ausgang des ersten Schwellenwertbauteils einen Eingang des zweiten Schwellenwertbauteils ansteuert und der Ausgang des zweiten Schwellenwertbauteils die Steuerelektrode des Schalttransistors ansteuert, gekennzeichnet durch eine Verzögerungsschaltung zwischen dem Ausgang des ersten und dem Eingang des zweiten Schwellenwertbauteils, die für einen ersten Schaltzustand des Schalttransistors stehende Ausgangssignale des ersten Schwellenwertbauteils erst nach Ablauf einer festgelegten Zeit an den Eingang des zweiten Schwellenwertbauteils weitergibt, für den anderen zweiten Schaltzustand stehende Ausgangssignale aber geringer verzögert durchlässt, wobei die Verzögerungsschaltung einen Kondensator aufweist und der Ausgang des ersten Schwellenwertbauteils beim Übergang von einem für den zweiten Schaltzustand stehenden Ausgangssignal zu einem für den ersten Schaltzustand stehenden Ausgangssignal mit einer hohen Impedanz an den Kondensator angeschlossen ist und bei einem Übergang von einem für den ersten Schaltzustand stehenden Ausgangssignal zu einem für den zweiten Schaltzustand stehenden Ausgangssignal mit einer niedrigeren Impedanz an den Kondensator angeschlossen ist.

Ferner richtet sich die Erfindung auch auf ein entsprechend ausgestattetes elektronisches Vorschaltgerät für Licht emittierende Geräte, insbesondere für Lampen. Schließlich hat die Erfindung auch einen Verfahrenscharakter und richtet sich daher auf ein Verfahren zum Betreiben der Wandlerschaltung bzw. des elektronischen Vorschaltgeräts und des Licht emittierenden Geräts, das das Vorschaltgerät versorgt. Im Folgenden wird zwischen dem Vorrichtungs- und Verfahrenscharakter der Erfindung nicht im Einzelnen unterschieden, so dass die gesamte Offenbarung sowohl vorrichtungs- als auch verfahrensmäßig zu verstehen ist.

Bevorzugte Ausgestaltungen sind in den abhängigen Ansprüchen angegeben.

Die erfindungsgemäße Ansteuerschaltung zeichnet sich durch zwei seriell geschaltete Bauteile aus, die hier als Schwellenwertbauteile bezeichnet werden. Damit sind solche elektronischen Bauteile gemeint, die schwellenwertabhängig mit einem relativ abrupten Ausgangssignalübergang auf ein Eingangssignal reagieren. Auf bevorzugte Beispiele für diese Schwellenwertbauteile wird noch im Folgenden eingegangen.

Das erste Schwellenwertbauteil soll so verschaltet sein, dass es den Strom-oder Spannungswert, auf den die Ansteuerschaltung ansprechen soll, erfassen kann. Dazu ist ein Eingang dieses ersten Schwellenwertbauteils direkt mit einem Abgriff an einem Messwiderstand verbunden. Das schwellenwertabhängig ansprechende Ausgangssignal dieses ersten Schwellenwertbauteils wird in der Reihenschaltung einem Eingang des zweiten Schwellenwertbauteils zugeführt, dessen Ausgangssignal dann zur Ansteuerung des Schalttransistors dient. Die Ansteuerschaltung benötigt keine weiteren Schwellenwertbauteile. Damit ergibt sich der Vorteil, mit einer einzigen integrierten Schaltung auskommen zu können, ohne dabei auf sehr spezielle und dementsprechend teuere Sondertypen zugreifen zu müssen. Um ein im Folgenden noch näher beschriebenes Beispiel für das Schwellenwertbauteil vorwegzunehmen, ist es etwa unproblematisch, einen IC einzusetzen, in dem zwei Komparatoren als Schwellenwertbauteile zur Verfügung stehen.

Die serielle Verschaltung der beiden Schwellenwertbauteile ist aber nicht nur vergleichsweise bauteilökonomisch sondern addiert ferner die Durchlaufzeiten des Signals durch die beiden Schwellenwertbauteile, womit eine gewünschte Zeitverzögerung für die Ansteuerung des Schalttransistors erzielt werden kann. Ferner ist das Ausgangssignal des ersten Schwellenwertbauteils vor seinem Eingang in das zweite Schwellenwertbauteil noch durch eine Kondensatorschaltung verzögert. Diese kapazitive Verzögerung erfolgt dabei signalzustandsabhängig indem Impedanzwechsel des Ausgangs des ersten Schwellenwertbauteils erzeugt oder ausgenutzt werden. Das zweite Schwellenwertbauteil hat dabei zur Folge, dass diese Signalbeeinflussung nicht direkt die Ansteuerung des Schalttransistors beeinflusst und dort beispielsweise durch zu langsame Schaltvorgänge zu unnötigen Schaltverlusten oder undefinierten Zwischenzuständen führt.

Bei dem für die Ansteuerschaltung maßgeblichen Strom- oder Spannungswert handelt es sich um einen in der Wandlerschaltung selbst abgegriffenen Strom- oder Spannungswert des Schalttransistors selbst. Die Ansteuerschaltung spricht auf den Schaltstreckenstrom an, der über einen Messwiderstand (Shunt-Widerstand) abgegriffen wird.

Die verwendete Wandlertopologie ist vorzugsweise ein Klasse-E-Wandler, wie er dem Fachmann geläufig ist. Es kann sich aber auch um eine andere Wandlertopologie mit einem Schalttransistor handeln. Bevorzugt sind natürlich solche Wandlertopologien, bei denen der Schalttransistor abhängig von einem Strom- oder Spannungswert und nicht einfach nur mit konstanten Zeiten geschaltet werden soll oder kann.

Ferner handelt es sich im Rahmen dieser Erfindung um ein einfach rückgekoppeltes System. In anderen Worten bildet die Strecke über die beiden Schwellenwertbauteile die einzige Rückkopplungsverbindung zwischen dem Schalttransistor, dessen Strom- oder Spannungswert abgegriffen wird, und dessen Steuerelektrode. Der zusätzliche Aufwand, der beispielsweise bei einer Konstruktion mit einem Oszillator, in dessen Schaltzeiten von außen eingegriffen werden kann, notwendig würde, kann so eingespart werden und es ist insbesondere möglich, mit lediglich zwei Schwellenwertbauteilen auszukommen. Zur Erläuterung wird auch auf die Ausführungsbeispiele verwiesen.

Eine bevorzugte Variante des erwähnten Schwellenwertbauteils ist ein Differenzverstärker, und zwar vorzugsweise ein Komparator, also ein Differenzverstärker mit genau zwei diskreten Ausgangszuständen. In Betracht kommen aber auch, wenngleich weniger bevorzugt, Operationsverstärker.

Schließlich ist der Begriff des Schwellenwertbauteils so zu verstehen, dass beispielsweise auch Schmitttrigger, die nicht mehr eigentlich als Differenzverstärker zu bezeichnen sind, darunter fallen. Schmitttrigger zeigen ein hystereseähnliches Verhalten, also abhängig von der Richtung der Signalveränderung zwei verschiedene Schwellenwerte.

Es wurde bereits erwähnt, dass die Erfindung den Vorteil einer Verzögerungsschaltung bietet, die im Fall eines von zwei Schaltzuständen des Schalttransistors ein Weiterlaufen des hierfür stehendes Signal verzögert und in dem anderen Fall das Signal im Wesentlichen unverzögert durchlässt. Dazu weist die Verzögerungsschaltung einen Kondensator auf und nutzt Impedanzwechsel des Ausgangs des ersten Schwellenwertbauteils aus. Durch diese Impedanzwechsel kommt es zu kurzen oder längeren Umladezeiten des Kondensators und damit zu der gewünschten signalzustandsabhängigen Verzögerung.

Die Impedanzwechsel können im Fall eines Push-Pull-Ausgangs des ersten Schwellenwertbauteils, beispielsweise des ersten Komparators, durch eine Gleichrichterdiode erzeugt werden. Diese ist so zu polen, dass sie bei dem gewünschten Signalzustand sperrt und damit eine hohe Impedanz erzeugt und ein entsprechend langsames Umladen des Kondensators, vorzugsweise durch einen anderen Schaltungspfad und nicht durch die sperrende Diode, ermöglicht. Im leitenden Zustand jedoch kann der Push-Pull-Ausgang den Kondensator relativ schnell umladen.

Die Notwendigkeit einer Gleichrichterdiode entfällt jedoch bei Open-Collector- oder Open-Drain-Ausgängen, die in einem Ausgangssignalzustand (eben in dem sog. offenen) eine relativ hohe Ausgangsimpedanz zeigen und im anderen Zustand im Wesentlichen einen niederohmigen Schluss zu einem Referenzpotential bilden.

Wenn in Kombination mit einer Verzögerung der Signalzustände zwischen den beiden Schwellenwertbauteilen zumindest für das zweite Schwellenwertbauteil ein Komparator gewählt wird, so kann in besonders einfacher Weise auch eine Einstellung der zeitlichen Verzögerung erfolgen, wenn der Referenzwert, der für den Komparator eingesetzt wird, einstellbar ist.

Der Ausgang des zweiten Schwellenwertbauteils muss nicht notwendigerweise direkt mit der Ansteuerelektrode des Schalttransistors verbunden sein. Hier können natürlich auch übliche Treiberschaltungen eingesetzt werden, um aus dem Ausgangssignal des zweiten Schwellenwertbauteils ein für den möglicherweise größeren Schalttransistor des Wandlers angepasstes Ansteuersignal zu bilden.

Vorzugsweise wird die erfindungsgemäße Wandlerschaltung in elektronischen Vorschaltgeräten eingesetzt, und zwar insbesondere bei solchen für sog. dielektrisch behinderte Entladungen. Dieser Lampenbautyp hat in den letzten Jahren eine zunehmende Aufmerksamkeit auf sich gezogen und zwar u. a. für stabförmige Lampen im Bereich der Büroautomatisation oder für flächige Lampen zur Hinterleuchtung von Anzeigetafeln, Monitoren und dgl. Der Typ der dielektrisch behinderten Entladungslampen wird als bekannt vorausgesetzt, zeichnet sich aber kurz gesagt dadurch aus, dass zumindest ein Teil von Elektroden dielektrisch von dem Entladungsmedium getrennt ist, es also nicht zu einer Gleichstromleitung sondern lediglich zu Verschiebungsströmen in der Lampe kommt. Insbesondere bei bestimmten gepulsten Betriebsweisen, für die sich das Klasse-E-Wandlerkonzept als vorteilhaft herausgestellt hat, lassen sich mit solchen Lampen beachtliche Wirkungsgrade und weitere technische Vorteil erzielen.

Die Erfindung wird im Folgenden anhand zweier Ausführungsbeispiele näher erläutert, wobei die einzelnen Merkmale auch in anderen Kombinationen erfindungswesentlich sein können.

### Kurze Beschreibung der Zeichnungen

- Fig. 1: zeigt ein schematisiertes Schaltbild eines ersten Ausführungsbeispiels für eine erfindungsgemäße Wandlerschaltung.
- Fig. 2: zeigt ein schematisiertes Schaltbild eines zweiten Ausführungsbeispiels für eine erfindungsgemäße Wandlerschaltung.

### Bevorzugte Ausführung der Erfindung

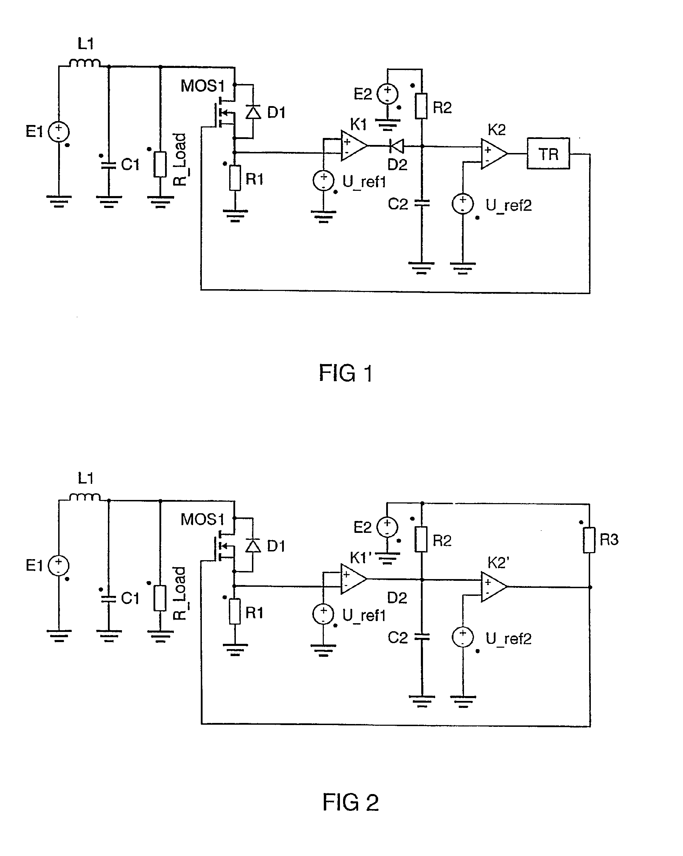

Fig. 1 zeigt einen Klasse-E-Wandler aus der Spannungsquelle E1, der Spule L1 und dem Kondensator C1 mit einer symbolisch eingezeichneten Last R_Load sowie dem Schalttransistor MOS1. Dem Schalttransistor ist zur Verdeutlichung eine Freilaufdiode D1 parallel geschaltet, die im vorliegenden Fall durch die Bodydiode des Schalttransistors MOS1 (als MOSFET ausgeführt) gegeben ist.

Die Spule L1 steht stellvertretend für einen Transformator, dessen Sekundärwicklung eine dielektrisch behinderte Lampe in Form eines Flächenstrahlers zur Monitorhinterleuchtung versorgt. Diese dielektrisch behinderte Lampe wirkt stark vereinfacht ausgedrückt im Wesentlichen kapazitiv und kann damit den Kondensator C1 ersetzen. Während der Entladungsphasen wirkt die dielektrisch behinderte Lampe weiterhin wie eine wechselstromleitfähige Impedanz und damit auch als Last. Die Last R_Load ist hier also nur symbolisch eingezeichnet, um eine Energiedissipation darzustellen.

Wenn der Schalttransistor MOS1 leitet, lädt der entsprechende Strom die Spule L1 auf, wobei der Kondensator C1 und der Lastwiderstand R_Load im Wesentlichen spannungsfrei bleiben. Wenn nun der Schalttransistor MOS1 geöffnet wird, ergibt sich ein Induktionsspannungspuls, der tatsächlich zur Zündung und zum Weiterbetrieb der Entladung in der Lampe führt, bei dem hier vereinfachten Schaltungsbild jedoch zunächst nur eine durch den Last-widerstand R_Load bedämpfte LC-Schwingung des Resonanzkreises aus der Spule L1 und dem Kondensator C1 anstößt. Diese LC-Schwingung soll beim Klasse-E-Konverter für mindestens eine Halbperiode laufen und wird dann, evtl. im Bereich eines Inversstroms, durch ein Wiedereinschalten des Schalttransistors MOS1 beendet.

Im Prinzip lassen sich Klasse-E-Konverter in unterschiedlicher Weise ansteuern, etwa durch Abschalten des Schalttransistors (hier MOS1) nach Erreichen eines gegebenen Schwellenwerts und erneutes Einschalten nach Erreichen eines anderen zweiten Schwellenwerts einer möglicherweise anderen Größe. Alternativ kann die Steuerung aber auch durch Abschalten nach Ablauf einer bestimmten Zeit und erneutes Einschalten nach Ablauf einer anderen bestimmten Zeit erfolgen. Im Zusammenhang mit dieser Erfindung ist jedoch eine dritte Variante von besonderem Interesse, bei der nämlich der Schalttransistor MOS1, wie in diesen Ausführungsbeispielen, bei Erreichen eines gegebenen Schwellenwerts abgeschaltet und nach Ablauf einer bestimmten Zeit wieder eingeschaltet wird.

Auf die Funktionsweise des Klasse-E-Wandlers und den Betrieb der Lampe soll aber hier nicht näher eingegangen werden. Die Erfindung befasst sich vielmehr mit der Ansteuerung des Schalttransistors MOS1 ansprechend auf den Schalttransistorstrom. Diesen Schalttransistorstrom greift eine Ansteuerschaltung über einen Shunt-Widerstand R1 ab und führt ihn dem invertierenden Eingang eines ersten Komparators K1 zu. Dort wird der entsprechende Spannungswert von einem Referenzspannungswert U_ref1 subtrahiert und abhängig von dem Vorzeichen der Differenz ein Ausgangssignal erzeugt. Bei diesem Ausführungsbeispiel handelt es sich um einen Push-Pull-Ausgang, dem eine Gleichrichterdiode D2 nachgeschaltet ist. Die Gleichrichterdiode D2 sperrt also ein positives Ausgangssignal und lässt ein negatives Ausgangssignal durch. Ein negatives Ausgangssignal bedeutet schaltungstechnisch das interne Referenzpotential. Das Referenzpotential entspricht in den Figuren dem Massesymbol und ist nicht mit den Referenzspannungen an den Eingängen der Komparatoren zu verwechseln.

Der durchgelassene negative Ausgangswert wird an den nicht-invertierenden Eingang eines zweiten Komparators K2 gelegt. Dort wird eine weitere Referenzspannung U_ref2 von diesem Signal subtrahiert und abhängig von dem Vorzeichen der Differenz wiederum mit einem Push-Pull-Ausgang eine positives Ausgangssignal oder ein dem internen Referenzpotential entsprechendes Ausgangssignal erzeugt.

Dieses wird über eine optionale Treiberstufe TR an das Gate des Schalttransistors MOS1 (eines Leistungs-MOSFETS) gelegt. Erreicht also der Schalttransistorstrom einen Schwellenwert, geht das Ausgangssignal des ersten Komparators K1 auf das Referenzpotential (logisch Null) und, ohne wesentliche Zeitverzögerung, das Ausgangssignal des zweiten Komparators K2 ebenfalls auf Referenzpotential, so dass die Treiberstufe TR des Schalttransistor MOS1 abschaltet.

Daraufhin sinkt der Transistorstrom natürlich schlagartig ab, was zu einem positiven Ausgangssignal des ersten Komparators K1 und damit zu einer Sperrpolung der Diode D2 führt. Eine bisher nicht erwähnte Spannungsquelle E2 lädt daraufhin über einen Pull-Up-Widerstand R2 einen mit seinem positiven Anschluss mit dem Signalweg zwischen dem Ausgang des ersten Komparators K1 und dem Eingang des zweiten Komparators K2 verbundenen Kondensator C2 auf. Die entsprechend R2 und C2 gebildete Zeitkonstante wird benötigt, um den Eingangswert an dem nicht-invertierenden Eingang des zweiten Komparators K2 so weit anzuheben, dass das Ausgangssignal des zweiten Komparators K2 wechselt und wiederum zur Ansteuerung, d. h. zum Einschalten des Schalttransistors MOS1 führt.

Durch Einstellung des Referenzwerts U_ref2 kann die Zeitkonstante in einfacher und direkter Weise eingestellt werden.

Zu der durch den Widerstand R2 und den Kondensator C2 gebildeten Zeitkonstante kommen jedoch die Durchlaufzeiten der beiden Komparatoren K1 und K2 hinzu.

Der Schalttransistor MOS1 bleibt also für eine entsprechende Zeit ausgeschaltet; die der Schwingungszeit des Klasse-E-Wandlers entspricht.

Umgekehrt ist der Entladevorgang des Kondensators C2 durch die Diode D2 und den Push-Pull-Ausgang des Komparators K1 vergleichsweise schnell, jedenfalls schneller als die Summe der Verzögerungszeiten der beiden Komparatoren K1 und K2 und des Schalters S1.

Das zweite Ausführungsbeispiel in Fig. 2 entspricht weitgehend dem ersten Ausführungsbeispiel aus Fig. 1 und wird insoweit auch nicht näher beschrie-ben. Die Unterschiede bestehen darin, dass die Komparatoren K1' und K2' jeweils einen Open-Collector- (oder Open-Drain-) Ausgang aufweisen und damit zunächst die Notwendigkeit für die Diode D2 entfällt. Der Open-Collector-Ausgang bildet nämlich im einer logischen Null entsprechenden Fall (negatives Ausgangssignal) einen niederohmigen Schluss zu dem Referenzpotential und ist in dem anderen Fall einer logischen Eins, also bei positivem Ausgangssignal, hochohmig. In diesem Fall wird also der Kondensator durch die Spannungsquelle E2 und den Pull-Up-Widerstand R2 aufgeladen.

Im Falle des hochohmigen Ausgangszustands des zweiten Komparators K2' wird jedoch bei diesem Ausführungsbeispiel ebenfalls über einen Pull-Up-Widerstand R3 und die erwähnte Spannungsquelle E2 ein entsprechendes positives Potential erzeugt.

## Patentansprüche

1. Wandlerschaltung für elektronische Vorschaltgeräte für Lampen mit einem Schalttransistor (MOS1) und
einer Ansteuerschaltung zur Ansteuerung des Schalttransistors (MOS1), welche dazu ausgelegt ist, den Schalttransistor (MOS1) ansprechend auf einen Spannungs- oder Stromwert zu schalten,
wobei die Ansteuerschaltung genau zwei in Reihe geschaltete Schwellenwertbauteile (K1, K2, K1', K2') aufweist, welche Schwellenwertbauteile (K1, K2, K1', K2') auf ein jeweiliges Eingangssignal schwellenwertabhängig mit einem Ausgangssignalübergang reagieren,
ein Eingang eines ersten der Schwellenwertbauteile (K1, K1') direkt mit einem Abgriff an einem Messwiderstand (R1) verbunden ist, welcher Messwiderstand (R1) in Reihe zum Schalttransistor (MOS1) geschalten ist und
der Ausgang des ersten Schwellenwertbauteils (K1, K1') einen Eingang des zweiten Schwellenwertbauteils (K2, K2') ansteuert und
der Ausgang des zweiten Schwellenwertbauteils (K2, K2') die Steuerelektrode des Schalttransistors (MOS1) ansteuert,
**gekennzeichnet durch** eine
Verzögerungsschaltung (R2, C2, D2) zwischen dem Ausgang des ersten (K1, K1') und dem Eingang des zweiten (K2, K2') Schwellenwertbauteils, die für einen ersten Schaltzustand des Schalttransistors (MOS1) stehende Ausgangssignale des ersten Schwellenwertbauteils (K1, K1') erst nach Ablauf einer festgelegten Zeit an den Eingang des zweiten Schwellenwertbauteils (K2, K2') weitergibt, für den anderen zweiten Schaltzustand stehende Ausgangssignale aber geringer-verzögert durchlässt, wobei die Verzögerungsschaltung (R2, C2, D2) einen Kondensator (C2) aufweist und der Ausgang des ersten Schwellenwertbauteils (K1, K1') beim Übergang von einem für den zweiten Schaltzustand stehenden Ausgangssignal zu einem für den ersten Schaltzustand stehenden Ausgangssignal mit einer hohen Impedanz (D2, K1') an den Kondensator angeschlossen ist und bei einem Übergang von einem für den ersten Schaltzustand stehenden Ausgangssignal zu einem für den zweiten Schaltzustand stehenden Ausgangssignal mit einer niedrigeren Impedanz (D2, K1') an den Kondensator angeschlossen ist.

2. Wandlerschaltung nach Anspruch 1, die einen Klasse-E-Wandler enthält.

3. Wandlerschaltung nach Anspruch 1, auch in Verbindung mit Anspruch 2, die als durch die Schwellenwertbauteile (K1, K1') einfach rückgekoppeltes System ausgelegt ist.

4. Wandlerschaltung nach einem der vorstehenden Ansprüche, bei der zumindest eines der Schwellenwertbauteile (K1, K2, K1', K2') ein Differenzverstärker ist, vorzugsweise beide Schwellenwertbauteile (K1, K2, K1', K2') Differenzverstärker sind.

5. Wandlerschaltung nach Anspruch 4, bei der der oder die Differenzverstärker (K1, K2, K1', K2') ein Komparator bzw. Komparatoren ist bzw. sind.

6. Wandlerschaltung nach Anspruch 1, bei der das erste Schwellenwertbauteil (K1) einen Push-Pull-Ausgang aufweist und die hohe Impedanz durch eine sperrende Gleichrichterdiode (D2) zwischen dem Ausgang des ersten Schwellenwertbauteils (K1) und dem Kondensator (C2) erzeugt wird.

7. Wandlerschaltung nach Anspruch 1, bei der das erste Schwellenwertbauteil (K1') einen Open-Collector- oder Open-Drain-Ausgang aufweist.

8. Wandlerschaltung nach Anspruch 5 oder 6, bei der das zweite Schwellwertbauteil (K2, K2') ein Komparator ist und ein Referenzwert des Komparators (K2, K2') einstellbar ist, um die festgelegte Zeit für das Weitergeben des für den ersten Schaltzustand des Schalttransistors (MOS1) stehenden Ausgangssignals einstellen zu können.

9. Wandlerschaltung nach einem der vorstehenden Ansprüche, bei der zwischen dem Ausgang des zweiten Schwellenwertbauteils (K2, K2') und der Steuerelektrode des Schalttransistors (MOS1) eine Treiberschaltung (TR) vorliegt.

10. Elektronisches Vorschaltgerät für ein Licht emittierendes Gerät (R_Load), insbesondere eine Lampe, mit einer Wandlerschaltung nach einem der vorstehenden Ansprüche.

11. Elektronisches Vorschaltgerät nach Anspruch 10, das zur Versorgung einer dielektrisch behinderten Entladungslampe (R_Load) ausgelegt ist.

12. Beleuchtungssystem aus einer Lampe (R_Load) und einem elektronischen Vorschaltgerät nach Anspruch 10 oder 11.

13. Verfahren zum Betreiben einer Wandlerschaltung nach einem der Ansprüche 1 - 9, bei dem das an dem Messwiderstand (R1) abgegriffene Signal der Ansteuerschaltung zugeführt wird und dort an den Eingang des ersten Schwellenwertbauteils (K1, K1') angelegt wird, ein darauf schwellenwertabhängig ansprechendes Ausgangssignal des ersten Schwellenwertbauteils (K1, K1') an den Eingang des zweiten Schwellenwertbauteils (K2, K2') angelegt wird und ein darauf schwellenwertabhängig ansprechendes Ausgangssignal des zweiten Schwellenwertbauteils (K2, K2') zur Ansteuerung der Steuerelektrode des Schalttransistors (MOS1) führt.

14. Verfahren zum Betreiben eines Licht emittierenden Geräts (R_Load) mit einem elektronisches Vorschaltgerät nach Anspruch 10, beinhaltend ein Verfahren zum Betreiben der Wandlerschaltung nach Anspruch 13.

## Claims

1. Converter circuit for electronic ballasts for lamps having a switching transistor (MOS1) and
a drive circuit for driving the switching transistor (MOS1) which is designed to switch the switching transistor (MOS1) in response to a voltage or current value,
the drive circuit having precisely two series-connected threshold value components (K1, K2, K1', K2') which respond to a respective input signal as a function of the threshold value with an output signal transition,
an input of a first one of the threshold value components (K1, K1') being connected directly to a tap at a measuring resistor (R1), which measuring resistor (R1) is connected in series with the switching transistor (MOS1), and
the output of the first threshold value component (K1, K1') drives an input of the second threshold value component (K2, K2'), and
the output of the second threshold value component (K2, K2') drives the control electrode of the switching transistor (MOS1),
a delay circuit (R2, C2, D2) between the output of the first (K1, K1') and the input of the second (K2, K2') threshold value component, which delay circuit (R2, C2, D2) passes on output signals, representing a first switching state of the switching transistor (MOS1), from the first threshold value component (K1, K1') to the input of the second threshold value component (K2, K2') only once a fixed time has elapsed, but allows output signals representing the other, second switching state to pass with less of a time delay, the delay circuit (R2, C2, D2) having a capacitor (C2), and the output of the first threshold value component (K1, K1') being connected to the capacitor at a high impedance (D2, K1') when there is a transition from an output signal representing the second switching state to an output signal representing the first switching state and being connected to the capacitor at a lower impedance (D2, K1') when there is a transition from an output signal representing the first switching state to an output signal representing the second switching state.

2. Converter circuit according to Claim 1, which contains a class E converter.

3. Converter circuit according to Claim 1, also in conjunction with Claim 2, which is designed as a single-feedback system via the threshold value components (K1, K1').

4. Converter circuit according to one of the preceding claims, in which at least one of the threshold value components (K1, K2, K1', K2') is a differential amplifier, preferably both of the threshold value components (K1, K2, K1', K2') are differential amplifiers.

5. Converter circuit according to Claim 4, in which the differential amplifier(s) (K1, K2, K1', K2') is/are (a) comparator(s).

6. Converter circuit according to Claim 1, in which the first threshold value component (K1) has a push-pull output, and the high impedance is generated by a rectifier diode (D2) which is off between the output of the first threshold value component (K1) and the capacitor (C2).

7. Converter circuit according to Claim 1, in which the first threshold value component (K1') has an open-collector or open-drain output.

8. Converter circuit according to Claim 5 or 6, in which the second threshold value component (K2, K2') is a comparator, and a reference value of the comparator (K2, K2') can be adjusted in order to be able to adjust the fixed time for passing on the output signal representing the first switching state of the switching transistor (MOS1).

9. Converter circuit according to one of the preceding claims, in which a driver circuit (TR) is provided between the output of the second threshold value component (K2, K2') and the control electrode of the switching transistor (MOS1).

10. Electronic ballast for a light-emitting device (R_Load), in particular a lamp, having the converter circuit according to one of the preceding claims.

11. Electronic ballast according to Claim 10, which is designed to supply power to a dielectric barrier discharge lamp (R_Load).

12. Illumination system comprising a lamp (R_Load) and the electronic ballast according to Claim 10 or 11.

13. Method for operating the converter circuit according to one of Claims 1 - 9, in which the signal tapped off at the measuring resistor (R1) is supplied to the drive circuit and is applied there to the input of the first threshold value component (K1, K1'), an output signal, which responds to said current or voltage value as a function of the threshold value, from the first threshold value component (K1, K1') is applied to the input of the second threshold value component (K2, K2'), and an output signal, which responds to said output signal from the first threshold value component (K1, K1') as a function of the threshold value, from the second threshold value component (K2, K2') leads to the control electrode driving the switching transistor (MOS1).

14. Method for operating a light-emitting device (R_Load) using the electronic ballast according to Claim 10, including the method for operating the converter circuit according to Claim 13.

## Revendications

1. Circuit convertisseur pour ballasts électroniques pour lampes, comprenant un transistor de commutation ( MOS1 ) et un circuit de commande pour la commande du transistor de commutation ( MOS1 ), lequel circuit de commande est conçu pour commuter le transistor de commutation ( MOS1 ) en réponse à une valeur de tension ou de courant,
le circuit de commande comportant exactement deux composants à valeur de seuil ( K1, K2, K1', K2' ) montés en série, lesquels composants à valeur de seuil ( K1, K2, K1', K2' ) réagissent à un signal d'entrée respectif, en fonction d'une valeur de seuil, avec une transition de signal de sortie,
une entrée d'un premier composant parmi les composants à valeur de seuil ( K1, K1' ) étant reliée directement à une prise sur une résistance de mesure ( R1 ), laquelle résistance de mesure ( R1 ) est montée en série avec le transistor de commutation ( MOS1 ), et
la sortie du premier composant à valeur de seuil ( K1, K1' ) commandant une entrée du deuxième composant à valeur de seuil ( K2, K2' ) et
la sortie du deuxième composant à valeur de seuil ( K2, K2' ) commandant l'électrode de commande du transistor de commutation ( MOS1 ),
**caractérisé par** un circuit de retardement ( R2, C2, D2 ) entre la sortie du premier composant à valeur de seuil ( K1, K1' ) et l'entrée du deuxième composant à valeur de seuil ( K2, K2' ), lequel circuit de retardement ne retransmet les signaux de sortie, présents pour un premier état de commutation du transistor de commutation ( MOS1 ), du premier composant à valeur de seuil ( K1, K1' ) à l'entrée du deuxième composant à valeur de seuil ( K2, K2' ) qu'après l'écoulement d'un temps fixé mais laisse passer les signaux de sortie présents pour l'autre deuxième état de commutation avec un retard moindre, le circuit de retardement ( R2, C2, D2 ) comportant un condensateur ( C2 ) et la sortie du premier composant à valeur de seuil ( K1, K1' ) étant raccordée avec une impédance élevée ( D2, K1' ) au condensateur lors de la transition d'un signal de sortie présent pour le deuxième état de commutation à un signal de sortie présent pour le premier état de commutation et étant raccordée avec une impédance réduite ( D2, K1' ) au condensateur lors de la transition d'un signal de sortie présent pour le premier état de commutation à un signal de sortie présent pour le deuxième état de commutation.

2. Circuit convertisseur selon la revendication 1, qui contient un convertisseur de classe E.

3. Circuit convertisseur selon la revendication 1, aussi en relation avec la revendication 2, qui est conçu comme un système simplement branché en rétroaction par les composants à valeur de seuil ( K1, K1' ).

4. Circuit convertisseur selon l'une des revendications précédentes, dans lequel au moins l'un des composants à valeur de seuil ( K1, K2, K1', K2' ) est un amplificateur différentiel, les deux composants à valeur de seuil ( K1, K2, K1', K2' ) étant de préférence des amplificateurs différentiels.

5. Circuit convertisseur selon la revendication 4, dans lequel le ou les amplificateurs différentiels est ou sont un ou des comparateurs.

6. Circuit convertisseur selon la revendication 1, dans lequel le premier composant à valeur de seuil ( K1 ) a une sortie symétrique et dans lequel l'impédance élevée est produite par une diode de redressement bloquante ( D2 ) entre la sortie du premier composant à valeur de seuil ( K1 ) et le condensateur ( C2 ).

7. Circuit convertisseur selon la revendication 1, dans lequel le premier composant à valeur de seuil ( K1' ) a une sortie à collecteur ouvert ou à drain ouvert.

8. Circuit convertisseur selon la revendication 5 ou 6, dans lequel le deuxième composant à valeur de seuil ( K2, K2' ) est un comparateur et dans lequel une valeur de référence du comparateur ( K2, K2' ) est réglable pour pouvoir régler le temps fixé pour la retransmission du signal de sortie présent pour le premier état de commutation du transistor de commutation ( MOS1 ).

9. Circuit convertisseur selon l'une des revendications précédentes, dans lequel un circuit d'attaque ( TR ) se trouve entre la sortie du deuxième composant à valeur de seuil ( K2, K2' ) et l'électrode de commande du transistor de commutation ( MOS1 ).

10. Ballast électronique pour un appareil émettant de la lumière ( R_Load ), notamment une lampe, ayant un circuit convertisseur selon l'une des revendications précédentes.

11. Ballast électronique selon la revendication 10, qui est conçu pour l'alimentation d'une lampe à décharge ( R_Load ) à barrière diélectrique.

12. Système d'éclairage constitué d'une lampe ( R_Load ) et d'un ballast électronique selon la revendication 10 ou 11.

13. Procédé pour faire fonctionner un circuit convertisseur selon l'une des revendications 1 à 9, dans lequel le signal prélevé à la résistance de mesure ( R1 ) est envoyé au circuit de commande et là à l'entrée du premier composant à valeur de seuil ( K1, K1' ), dans lequel un signal de sortie du premier composant à valeur de seuil ( K1, K1' ) répondant à cet envoi en fonction d'une valeur de seuil est envoyé à l'entrée du deuxième composant à valeur de seuil ( K2, K2' ) et dans lequel un signal de sortie du deuxième composant à valeur de seuil ( K2, K2' ) répondant à cet envoi en fonction d'une valeur de seuil conduit à la commande de l'électrode de commande du transistor de commutation ( MOS1 ).

14. Procédé pour faire fonctionner un appareil émettant de la lumière ( R_Load ) avec un ballast électronique selon la revendication 10, comportant un procédé pour faire fonctionner le circuit convertisseur selon la revendication 13.
